# EUROPEAN PATENT APPLICATION

(11) **EP 4 134 879 A1**
(43) Date of publication of application: **15.02.2023**
(21) Application number: 21190562.5
(22) Date of filing: 10.08.2021
(51) Int. Cl.: G06N 5/02, G06N 3/04, G06N 3/00, G06N 7/00, G06N 3/08

(54) **METHOD AND SYSTEM FOR TRAINING A MACHINE LEARNING MODEL**

(71) Applicant: Siemens Aktiengesellschaft, 80333 München (DE)
(72) Inventor: Hildebrandt, Marcel, 80634 München (DE); Joblin, Mitchell, 81825 München (DE); Mogoreanu, Serghei, 81827 München (DE); Ringsquandl, Martin, 83064 Raubling (DE); Yee, Dianna, 81825 München (DE)

(57) **Abstract**

An initially trained machine learning model is used by an active learning module to generate candidate triples, which are fed into an expert system for verification. As a result, the expert system outputs novel facts that are used for retraining the machine learning model. This approach consolidates expert systems with machine learning through iterations of an active learning loop, by bringing the two paradigms together, which is in general difficult because training of a neural network (machine learning) requires differentiable functions and rules (used by expert systems) tend not to be differentiable. The method and system provide a data augmentation strategy where the expert system acts as an oracle and outputs the novel facts, which provide labels for the candidate triples. The novel facts provide critical information from the oracle that is injected into the machine learning model at the retraining stage, thus allowing to increase its generalization performance. Furthermore, deployment effort and maintenance costs are reduced, since in industrial AI applications mentioned above, only the machine learning model needs to be deployed instead of deploying a machine learning model as well as an expert system. According to an embodiment, the active learning module identifies candidate triples, for which, if the truth value was known, it would maximally boost the performance of the machine learning model. In other words, the active learning module chooses candidate triples representing unknown facts that lie close to the decision boundary of the machine learning model. In this way, the novel facts are sampled efficiently from the expert system such that the generalization performance of the machine learning model is maximized.

## Description

Over the last decades, graph-structured knowledge bases (also known as knowledge graphs, KGs) have become a widely used resource to structure factual knowledge in a machine-readable format. The nodes in the graph correspond to entities of the real-world. Typed edges between pairs of nodes indicate their relationships and encode factual statements. Similar to any other database KGs may suffer from incompleteness in the sense that they do not include all true facts in the domain at hand. Inferring missing facts (also known as knowledge base completion, KBC) is the most commonly posed artificial intelligence (AI) objective with respect to KGs. Moreover, providing recommendations to a user can be phrased in a KBC setting.

As many other industrial AI applications, existing KBC techniques are drawing either from symbolic AI or machine learning (ML). On the symbolic AI side, expert systems provide a means of capturing domain knowledge in the form of logical rules that can be used to infer novel facts. On the machine learning side, learning algorithms are capable of learning from training data to solve analogous reasoning tasks, which is ideal in scenarios where sufficient training data is available and the domain is too complex to sufficiently capture using hand crafted logical rules.

It is an object of the present invention to identify a problem in the prior art and to find a technical solution for the identified problem.

The objectives of the invention are solved by the independent claims. Further advantageous arrangements and embodiments of the invention are set forth in the respective dependent claims.

According to the computer implemented method for training a machine learning model, the following operations are performed by components, wherein the components are software components executed by one or more processors and/or hardware components:
- training, by a training module, a machine learning model based on known facts,
- generating, by an active learning module using the machine learning model, candidate triples,
- reasoning, by an expert system, in order to verify the candidate triples,
- outputting, by the expert system, novel facts, with the novel facts representing the result of the verification, and
- retraining, by the training module, the machine learning model based on the novel facts.

The system for training a machine learning model comprises the following components:
- a memory storing known facts, and
- a training module, configured for training a machine learning model based on the known facts,
- an active learning module, configured for generating candidate triples using the machine learning model,
- an expert system, configured for verifying the candidate triples using reasoning and outputting novel facts, with the novel facts representing the result of the verification, and
- wherein the training module is also configured for retraining the machine learning model based on the novel facts.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices or any other communication devices that can process data with computer support, processors and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and system, or at least some of their embodiments, consolidate an expert system with machine learning through iterations of an active learning loop. This is advantageous in industrial AI applications that do not neatly fall either into the paradigm of expert systems or into the paradigm of machine learning. In these cases, the method and system, or at least some of their embodiments, bring the two paradigms together, which is in general difficult because training of a neural network (machine learning) requires differentiable functions and rules (used by expert systems) tend not to be differentiable. Using the expert system to infer all possible novel facts and providing them as additional training data to the machine learning model would be impractical and wasteful, as many facts may already be well understood by the machine learning model. In comparison to such an approach, the method and system, or at least some of their embodiments, reduce training time without compromising generalization performance.

The method and system, or at least some of their embodiments, can learn not just from the known facts, but also leverage the knowledge contained in the expert system (which is, for example, formalized as logical rules). Furthermore, the method and system, or at least some of their embodiments, provide a computationally efficient training process as training efficiency is improved and computing costs for the training procedure are reduced.

Generalization performance of the machine learning model is improved, as the machine learning model is encouraged to align with the novel facts that are provided by the expert system.

Furthermore, the method and system, or at least some of their embodiments, can reduce deployment effort and maintenance costs, since in the industrial AI applications mentioned above, only the machine learning model needs to be deployed instead of deploying the machine learning model as well as the expert system.

The method and system, or at least some of their embodiments, provide a data augmentation strategy where the expert system acts as an oracle and outputs the novel facts, which provide labels for the candidate triples. The novel facts provide critical information from the oracle that is injected into the machine learning model at the retraining stage, thus allowing to increase its generalization performance.

Of course, the retraining operation can train the machine learning model not only based on the novel facts, but also based on the known facts, if necessary.

In an embodiment of the method and system, the active learning module generates candidate triples that lie close to a decision boundary of the machine learning model, in particular by
- using uncertainty sampling,
- using Bayesian optimization, or
- learning a selection policy using reinforcement learning.

According to this embodiment, the active learning module identifies candidate triples, for which, if the truth value was known, it would maximally boost the performance of the machine learning model. In other words, the active learning module chooses candidate triples representing unknown facts that lie close to the decision boundary of the machine learning model. Due to the efforts of the active learning model, the novel facts are sampled efficiently from the expert system such that the generalization performance of the machine learning model is maximized.

In an embodiment of the method and system, the generating operation includes at least
- calculating, by the machine learning model, a calibrated score for each unknown fact of a set of unknown facts, wherein the calibrated score reflects a predicted truth value of the respective unknown fact, and
- determining, by a query strategy module, the candidate triples by processing
   - the set of unknown facts, parameters of the machine learning model and the calibrated scores, and in particular also the known facts.

In an embodiment of the method and system, a calibration of the calibrated scores is implemented with
- a probabilistic treatment, in particular with Bayesian neural networks, or
- a post processing step, in particular Platt scaling.

In an embodiment of the method and system, the expert system
- contains an inference engine and logical rules for processing the candidate triples, or
- is an application wherein the machine learning model is applicable, in particular an engineering configurator configured for checking a consistency of the candidate triples within a configuration.

According to this embodiment, the expert system contains a set of logical rules and an inference engine, wherein the set of logical rules is used by the inference engine to infer the novel facts. Alternatively, the application where the machine learning model will be applied can be repurposed as the expert system, fulfilling its function as an oracle.

In an embodiment of the method and system, the training and retraining operations include optimizing, by the training module, parameters of the machine learning model with respect to a loss function, with the loss function describing an accuracy of the calibrated scores computed by the machine learning model.

In an embodiment of the method and system, the machine learning model is implemented as a graph neural network, or as a knowledge graph embedding algorithm capable of producing the calibrated scores.

In an embodiment of the method, the steps of the method are iterated in an active learning loop.

The computer program product has program instructions for carrying out the method.

The provision device for the computer program product stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first example of an industrial automation solution,
- Fig. 2: shows a second example of an industrial automation solution,
- Fig. 3: shows an example of a system for training a machine learning model,
- Fig. 4: shows a flowchart of a possible exemplary embodiment of a method for training a machine learning model,
- Fig. 5: shows another embodiment, and
- Fig. 6: shows another embodiment.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components/modules or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

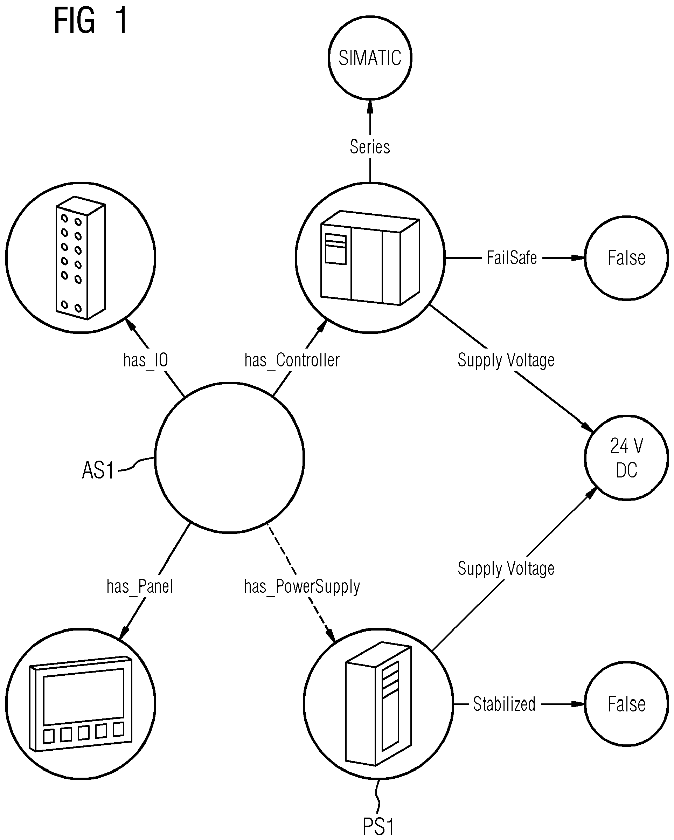

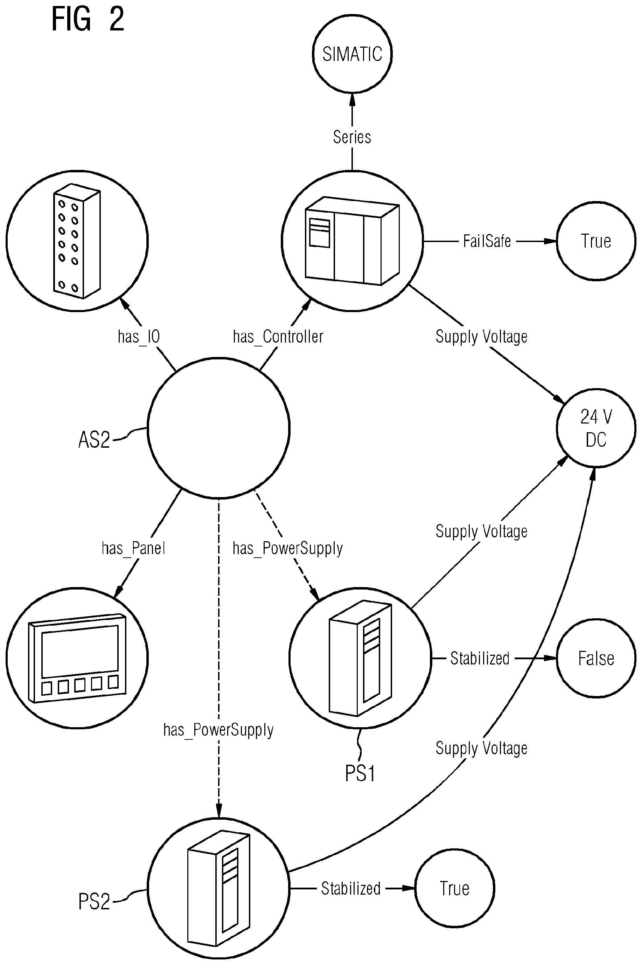

In the following, examples of recommendations for industrial configuration software will be discussed with regard to Fig. 1 and Fig. 2. The recommendations can be given, for example, by an industrial engineering configurator such as the TIA Selection Tool (TST) that is equipped with an AI-driven recommender system.

Fig. 1 and Fig. 2 sketch two industrial automation solutions as subgraphs of a knowledge graph, with Fig. 1 showing a subgraph for a first automation solution AS1 that contains a first power supply PS1 and Fig. 2 showing a subgraph for a second automation solution AS2 that contains a second power supply PS2. Assuming that both automation solutions AS1, AS2 are part of industrial cooling systems, they share the same functional requirements. However, depending on the application area, the components within both automation solutions AS1, AS2 may come with different requirements concerning reliability. For example, suppose that the cooling system of the first automation solution AS1 is deployed in the food industry and the cooling system of the second automation solution AS2 regulates the temperature of a nuclear power plant. Since both systems share many components, a machine learning-driven recommender system (e.g., based on knowledge graph embeddings) will most likely produce similar embeddings of both solutions. In turn, the system might also recommend the first power supply PS1 as a complement to the second automation solution AS2. However, the first power supply PS1 is infeasible for cooling nuclear power reactors because it does not possess the stabilized property. Making use of a rule base, which states that a stabilized power supply should be recommended if a FailSafe controller is configured, may have helped to make a better recommendation (e.g., recommending the second power supply PS2 over the first power supply PS1).

The following embodiment is based on an open world assumption: It is assumed that the truth value of any fact in the form of a triple (subject, predicate, object) may be true, regardless of whether or not it is known to be true.

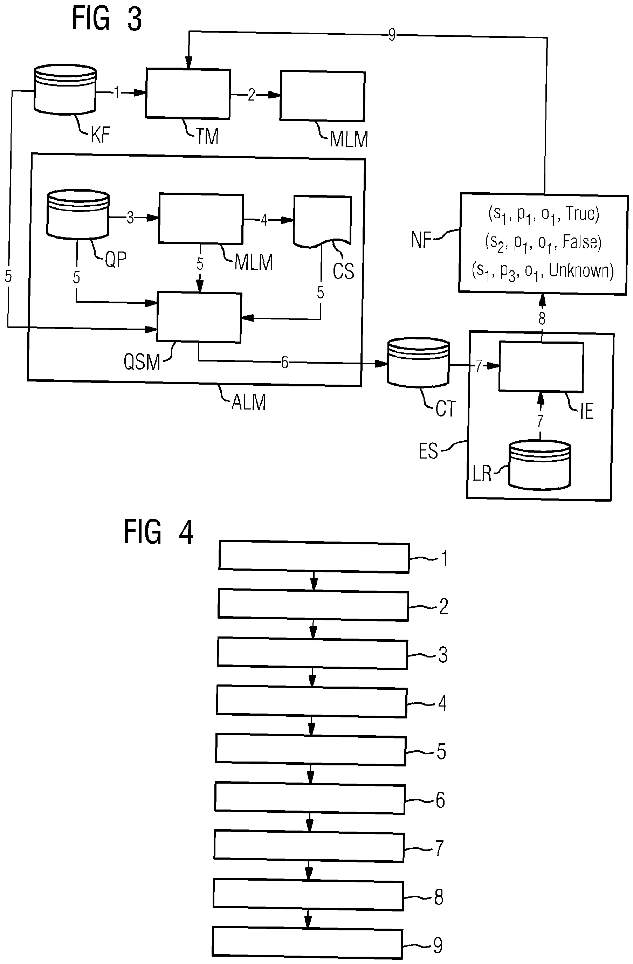

Fig. 3 shows an example of a system that consolidates an expert system ES with machine learning through iterations of an active learning loop. The arrows are numbered according to the order of operations within one iteration of the active learning loop. The order of operation of the system components will be described with regard to Fig. 4.

The system shown in Fig. 3 consists of the following components:
- An expert system ES containing logical rules LR and an inference engine IE, which is a logical reasoner,
- an initial set of known facts KF in the form of triples (subject, predicate, object) (e.g., Max Mustermann, works_at, Siemens),
- a machine learning model MLM capable of learning from a set of facts and producing calibrated scores CS regarding a fact's existence,
- a training module TM, and
- an active learning module ALM responsible for querying the machine learning model MLM and defining candidate triples CT to be provided to the expert system ES for verification.

The expert system ES contains a set of logical rules LR that are used by the inference engine IE to infer novel facts NF about the domain. It is not necessary that the logical rules LR are complete, but they should be sufficiently numerous to infer a vast number of novel facts NF (e.g., at least on the order of millions). For the expert system ES, the minimal interface necessary is specified as follows: given a fact (here a candidate triple CT, see below) in the form of a triple (subject, predicate, object), the inference engine IE must return a true, false, or unknown value. To determine whether a fact is false, local closed world assumptions may be necessary. If false assertions are not possible, leveraging only knowledge about true facts is still beneficial.

For many practical applications, one does not have access to a set of explicit, machine-readable rules that allow to build the expert system ES. However, a lot of domain expertise may be implicitly encoded in industrial software. For example, engineering configurators (e.g., the TIA Selection Tool) typically perform compatibility checks to give a user feedback whether the selected components meet basic consistency requirements. In case it is not feasible to build the expert system ES based on explicit rules, a variant of the current embodiment repurposes the application where the machine learning model MLM will be applied, for example an engineering configurator, as an oracle, in other words, that application then serves as the expert system ES.

The initial set of known facts KF are required by the training module TM to train the machine learning model MLM. This is because the embodiment relies on active learning to determine candidate triples CT, and the selection of the candidate triples CT is conditioned on calibrated scores CS provided by the machine learning model MLM, the machine learning model parameters, and the known facts KF. In order to provide those calibrated scores CS, the machine learning model MLM needs initial training from the training module TM.

The machine learning model MLM itself (or an underlying machine learning system that produces the machine learning model MLM) must be capable of learning facts of the form of triples (subject, predicate, object). Once the machine learning model MLM has been trained with these triples, it must be capable of providing a calibrated score CS that reflects the predicted truth value of an unknown fact. The notion of calibration here means that the calibrated score CS accurately reflects the uncertainty in the model's predictions (e.g., given a score of 50%, out of all facts that score 50%, half of them turn out to be true and half of them turn out to be false). Calibration may be achieved in numerous ways such as through a probabilistic treatment (Bayesian neural networks) or as a post processing step (Platt scaling). Regardless of how calibration is achieved, it is absolutely critical although most methods (especially neural network-based methods) are not naturally calibrated.

The machine learning model MLM can be implemented, for example, as a graph neural network or any knowledge graph embedding algorithm capable of producing the calibrated scores CS.

The training module TM is responsible for optimizing the parameters of the machine learning model MLM with respect to a loss function that describes how well the machine learning model MLM is able to correctly score a set of facts. Initially, only true facts (the known facts KF) are provided during training. Once initialized, the machine learning model MLM can be used by the active learning module ALM to generate candidate triples CT that can be given to the inference engine IE. The training process can then leverage the truth value of triples not contained in the initial set of known facts KF. The training module TM is also responsible for ensuring that the machine learning model MLM produces calibrated scores CS.

For each iteration of the active learning loop, the active learning module ALM produces a set of unknown facts, which are the candidate triples CT. The goal of the active learning module ALM is to choose candidate triples CT that are going to maximally increase the machine learning model MLM's generalization performance if their truth value were known. The candidate triples CT are then provided to the expert system ES to test whether a truth value can be determined.

The intelligence of the active learning module ALM lies within the heuristic used by a query strategy module QSM to determine the candidate triples CT. A variety of solutions can be applied for implementing the query strategy module QSM: uncertainty sampling, Bayesian optimization, or reinforcement learning (to learn a selection policy). The query strategy module QSM receives as input:
- the machine learning model MLM (for example, its model parameters) capable of providing the calibrated scores CS,
- a query pool QP containing a set of unknown facts, and
- the known facts KF.

Fig. 4 shows the operations of a single active learning loop. Iterations of the active learning loop help to consolidate the expert system ES with machine learning as was described with regard to Fig. 3. The operations will now be described in their sequence in order to provide a better understanding of the components shown in Fig. 3.

In a fetching operation 1, the training module TM fetches the known facts KF from a database. The database can be stored in any kind of memory, for example RAM or a hard disk.

In a training operation 2, the training module TM trains the machine learning model MLM based on the known facts KF, and/or based on novel facts NF if there have been previous iterations of the active learning loop.

In a processing operation 3, the machine learning model MLM processes the set of unknown facts stored in the query pool QP.

In a calculating operation 4, the machine learning model MLM calculates a calibrated score CS for each unknown fact that reflects its predicted truth value.

In a receiving operation 5, the query strategy module QSM receives as input the known facts KF, the set of unknown facts stored in the query pool QP, parameters of the machine learning model MLM, and the calibrated scores CS.

In determining operation 6, the query strategy module QSM determines the candidate triples CT.

In a reasoning operation 7, the inference engine IE processes the candidate triples CT and the logical rules LR in order to verify the candidate triples CT.

In an output operation 8, the inference engine IE outputs novel facts NF representing the result of the verification by outputting each candidate triple CT together with a true, false, or unknown value. In other words, the expert system ES serves as an oracle generating additional labels for unknown facts that lie close to the decision boundary of the machine learning model MLM.

As shown in the example given in Fig. 3, the novel facts NF that are output in the output operation 8 can be that a first triple (with a first subject s1, a first predicate p1, and a first object o1) represents a fact that is true, that a second triple (with a second subject s1, the first predicate p1, and the first object o1) represents a fact that is false, and that a third triple (with the first subject s1, a third predicate p3, and the first object o1) represents a fact of which the truth is unknown to the inference engine IE based on the logical rules LR.

In a variant of the embodiment, only a true vs. unknown value is determined in the reasoning operation 7 and output for the respective candidate triple CT in the output operation 8.

In a retraining operation 9, the novel facts NF are processed by the training module in order to retrain the machine learning model MLM. In the reasoning operation 7, the novel facts NF are efficiently sampled from the expert system ES such that the generalization performance of the machine learning model MLM is maximized, once this critical information is injected back into the machine learning model MLM during the retraining operation 9, thus allowing to increase the generalization performance of the machine learning model MLM.

Alternatively, the application where the machine learning model MLM will be applied can be used as the expert system ES, even if it has no logical rules LR. The respective application (for example, an engineering configurator) then performs, for example, a compatibility check based on the candidate triples CT as the reasoning operation 7 in order to determine the novel facts NF for the output operation 8.

The active learning loop is iterated by repeating the operations 1 - 9 (or 2 - 9 if, depending on the type of machine learning model MLM implemented, the known facts KF do not have to be used again by the training module TM).

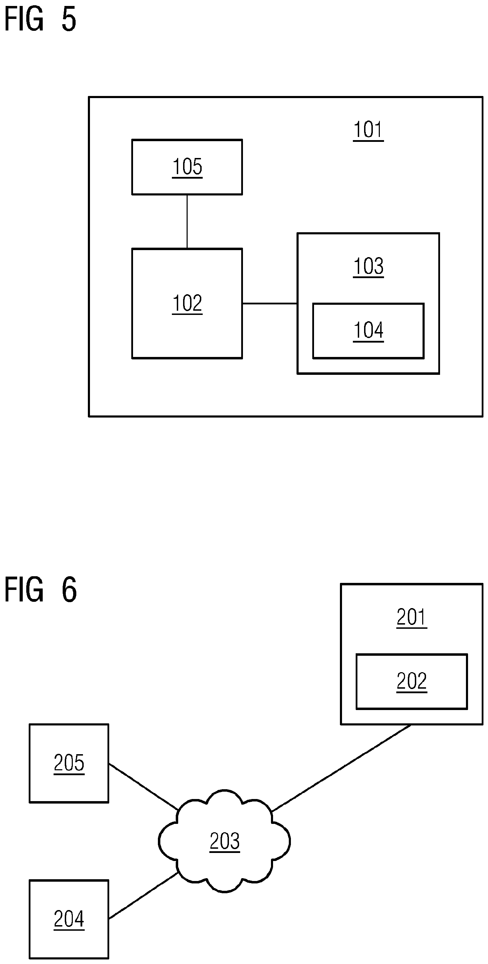

Fig. 5 shows one sample structure for computer-implementation of the invention which comprises:
- (101): computer system
- (102): processor
- (103): memory
- (104): computer program (product)
- (105): user interface

In this embodiment of the invention the computer program product 104 comprises program instructions for carrying out the invention. The computer program 104 is stored in the memory 103 which renders, among others, the memory and/or its related computer system 101 a provisioning device for the computer program product 104. The system 101 may carry out the invention by executing the program instructions of the computer program 104 by the processor 102. Results of invention may be presented on the user interface 105. Alternatively, they may be stored in the memory 103 or on another suitable means for storing data.

Fig. 6 shows another sample structure for computer-implementation of the invention which comprises:
- (201): provisioning device
- (202): computer program (product)
- (203): computer network / Internet
- (204): computer system
- (205): mobile device / smartphone

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

Preferably, the embodiments shown in Fig. 3 and Fig. 4 can be implemented with a structure as shown in Fig. 5 or Fig. 6.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

## Claims

1. A computer implemented method for training a machine learning model (MLM), comprising the following operations, wherein the operations are performed by components, and wherein the components are software components executed by one or more processors and/or hardware components:
- training (2), by a training module (TM), a machine learning model (MLM) based on known facts (KF),
- generating, by an active learning module (ALM) using the machine learning model (MLM), candidate triples (CT),
- reasoning (7), by an expert system (ES), in order to verify the candidate triples (CT),
- outputting (8), by the expert system (ES), novel facts (NF), with the novel facts (NF) representing the result of the verification, and
- retraining (9), by the training module (TM), the machine learning model (MLM) based on the novel facts (NF).

2. The method according to claim 1,
- wherein the active learning module (ALM) generates candidate triples (CT) that lie close to a decision boundary of the machine learning model (MLM), in particular by
- using uncertainty sampling,
- using Bayesian optimization, or
- learning a selection policy using reinforcement learning.

3. The method according to any of the preceding claims, wherein the generating operation includes at least
- calculating (4), by the machine learning model (MLM), a calibrated score (CS) for each unknown fact of a set of unknown facts, wherein the calibrated score (CS) reflects a predicted truth value of the respective unknown fact, and
- determining (6), by a query strategy module (QSM), the candidate triples (CT) by processing
- the set of unknown facts, parameters of the machine learning model (MLM) and the calibrated scores (CS), and in particular also the known facts (KF).

4. The method according to claim 3,
wherein a calibration of the calibrated scores (CS) is implemented with
- a probabilistic treatment, in particular with Bayesian neural networks, or
- a post processing step, in particular Platt scaling.

5. The method according to any of the preceding claims,
wherein the expert system (ES)
- contains an inference engine (IE) and logical rules (LR) for processing the candidate triples (CT), or
- is an application wherein the machine learning model (MLM) is applicable, in particular an engineering configurator configured for checking a consistency of the candidate triples (CT) within a configuration.

6. The method according to any of the preceding claims,
- wherein the training (2) and retraining (9) operations include optimizing, by the training module (TM), parameters of the machine learning model (MLM) with respect to a loss function, with the loss function describing an accuracy of the calibrated scores (CS) computed by the machine learning model (MLM).

7. The method according to any of the preceding claims,
- wherein the machine learning model (MLM) is implemented as a graph neural network, or as a knowledge graph embedding algorithm capable of producing the calibrated scores (CS).

8. The method according to any of the preceding claims, wherein the steps of the method are iterated in an active learning loop.

9. A system for training a machine learning model (MLM), comprising the following components:
- a memory storing known facts (KF), and
- a training module (TM), configured for training (2) a machine learning model (MLM) based on the known facts (KF),
- an active learning module (ALM), configured for generating candidate triples (CT) using the machine learning model (MLM),
- an expert system (ES), configured for verifying the candidate triples (CT) using reasoning (7) and outputting novel facts (NF), with the novel facts (NF) representing the result of the verification, and
- wherein the training module (TM) is also configured for retraining (9) the machine learning model (MLM) based on the novel facts (NF).

10. Computer program product with program instructions for carrying out a method according to one of the method claims.

11. Provision device for the computer program product according to the preceding claim, wherein the provision device stores and/or provides the computer program product.
